# EUROPÄISCHE PATENTSCHRIFT

(11) **EP 3 609 668 B1**
(45) Veröffentlichungstag und Bekanntmachung des Hinweises auf die Patenterteilung: **09.10.2024**
(21) Anmeldenummer: 18713902.7
(22) Anmeldetag: 27.03.2018
(51) Int. Cl.: B29C 45/14, B29C 45/56, B29K 105/04, B29L 31/30

(54) **VERFAHREN ZUM HERSTELLEN EINES GESCHÄUMTEN DEKORIERBAREN TRÄGERTEILS FÜR EIN KRAFTFAHRZEUG**
PROCESS FOR MANUFACTURING A FOAMED DECORATED CARRIERSTRUCTURE FOR A VEHICLE
PROCEDE DE LA FABRICATION D'UNE STRUCTURE MOUSSE ET DECOREE POUR UN VEHICULE

(30) Priorität: 10.04.2017 DE 102017206090
(43) Veröffentlichungstag der Anmeldung: 19.02.2020
(73) Patentinhaber: Bayerische Motoren Werke Aktiengesellschaft, 80809 München (DE)
(72) Erfinder: HATTENSPERGER, Michael, 84416 Inning am Holz (DE); LESSER, Roman, 84030 Ergolding (DE)
(86) Internationale Anmeldenummer: PCT/EP2018/057738
(87) Internationale Veröffentlichungsnummer: WO 2018/188939

(56) Entgegenhaltungen:
- WO-A2-94/03337
- DE-A1- 1 942 494
- DE-A1- 10 328 046
- DE-A1- 10 335 620
- DE-A1- 102006 051 897
- DE-A1- 102007 024 529
- DE-A1- 102011 050 479
- DE-A1- 2 443 905

## Beschreibung

Die Erfindung betrifft ein Verfahren zum Herstellen eines geschäumten dekorierten Trägerteils für ein Kraftfahrzeug. Außerdem betrifft die Erfindung eine Verwendung einer Folie in einem derartigen Verfahren. Außerdem betrifft die Erfindung ein geschäumtes dekoriertes Trägerteil für ein Kraftfahrzeug.

Aus der DE 35 22 878 A1 ist ein Verfahren bekannt zur Herstellung von dekorativen Verkleidungselementen, z.B. für Türen von Kraftfahrzeugen, bei dem auf einem der gewünschten Verkleidungsform angepassten Träger aus Holzfaserwerkstoff, ABS o.dgl., eine mehrere Millimeter starke Schaumstoffschicht die mit einer von ihr abgestützten äußeren Stoffschicht verbunden ist, aufgebracht und mit Hilfe von zumindest in Teilbereichen der Berührungszone zwischengeschaltetem Klebstoff unter Druck- und Wärmeeinwirkung verbunden wird, wobei zwischen Träger und Schaumstoffschicht ein HF-aktivierbarer Kaschierkleber eingebracht und die Einheit aus Träger sowie Schaumstoffschicht mit Stoffschicht anschließend unter geringer Druckbeaufschlagung der Wirkung eines Hochfrequenzfeldes ausgesetzt wird.

Aus der DE 10 2009 042 550 A1 ist ein Verfahren bekannt zum Herstellen eines als Verbundbauteil ausgebildeten Innenausstattungsteils für Kraftfahrzeuge mit einem formstabilen Kunststoffträger und einer sichtseitigen Dekorfläche, die in drei Bereichen unterschiedliche Oberflächenbeschaffenheiten aufweist, umfassend einen Tiefzieh- oder Thermoformverfahrensteil, worin ein erster Zuschnitt eines flachen Dekormaterials in die Gestalt der Dekorfläche des ersten Bereichs vorgeformt wird, einen Hinterspritz- oder Hinterpressverfahrensteil, worin ein formstabiles Trägerteil aus Kunststoff erzeugt wird, das in einem ersten Abschnitt mit dem vorgeformten Zuschnitt verbunden ist, in einem zweiten Abschnitt eine dekorative Oberfläche aufweist, die den zweiten Bereich der Dekorfläche bildet, in einem dritten Abschnitt mit einer flächigen Ausnehmung versehen ist und entlang der benachbarten Randkanten zwischen dem zweiten Abschnitt und den weiteren Abschnitten jeweils eine Nut in dem formstabilen Trägerteil enthält, und einen Kaschierverfahrensteil, worin ein zweiter Abschnitt eines weiteren flachen Dekormaterials in der flächigen Ausnehmung des formstabilen Trägerteils angeordnet und befestigt wird.

Aus der DE 10 2011 085 412 A1 ist ein Verfahren bekannt zum Herstellen eines Fahrzeugbauteils, insbesondere eines Fahrzeuginterieurbauteils, mit mehreren Schichten umfassend die Schritte: Aufbringen eines Schmelzklebstoffs, der ein erstes Basispolymer mit einem ersten Schmelzpunkt und ein zweites Basispolymer mit einem zweiten, im Vergleich zum ersten Schmelzpunkt höheren Schmelzpunkt enthält, mit einer Temperatur größer oder gleich dem zweiten Schmelzpunkt auf eine Seite einer ersten Schicht der zwei Schichten; Aufbringen einer zweiten Schicht der zwei Schichten auf die mit dem Schmelzklebstoff versehene Seite der ersten Schicht; Erhitzen des Schmelzklebstoffs zwischen der ersten und zweiten Schicht auf eine Temperatur größer oder gleich dem ersten Schmelzpunkt und kleiner dem zweiten Schmelzpunkt in einem Kaschierwerkzeug, Entformen des Bauteils aus dem Kaschierwerkzeug vor dem vollständigen Abkühlen des Schmelzklebstoffs.

Aus dem Dokument DE 10 2006 051 897 A1 ist ein Verfahren bekannt zur Herstellung von ein- oder mehrfach bedruckten verformten Folien, bei dem eine thermoplastische Folie optional mit einer oder mehreren farbgebenden Beschichtungsmitteln bedruckt und anschließend zur Beschichtung getrocknet und/oder gehärtet wird, wobei das Beschichtungsmittel und die Trocknungs-/Härtungsbedingungen so gewählt werden, dass die Beschichtung thermoplastisch ist und anschließend diese mit mindestens einem Beschichtungsmittel bedruckt wird, welches mit aktinischer Strahlung härtbare Bestandteile enthält, anschließend das Beschichtungsmittel ohne Einwirkung aktinischer Strahlung zu einer blockfesten und thermoplastischen Beschichtung getrocknet und/oder gehärtet wird, die beschichtete Folie durch geeignete Werkzeuge unter Einwirkung erhöhter Temperatur verformt wird und die Beschichtung durch Einwirkung von aktinischer Strahlung zu einer duromeren Schicht gehärtet wird und optional die Folie mit thermoplastischen Kunststoffen hinterspritzt oder mit ein- oder mehrkomponentigen Kunststoffen hinterschäumt wird. Dem Dokument DE 10 2006 051 897 A1 zufolge kann auf der beschichtete Folie kann vor oder nach der Endhärtung durch Hinterspritzen oder auch Hinterschäumen modifiziert werden, ggf. mit einer Klebschicht als Haftverm ittler.

Das Dokument WO 2018/188939 A1 betrifft einen Lackfilm mit einer Deckschicht, einer Klarlackschicht, einer Farbschicht, einer Verstärkungsschicht und einer Haftschicht und ein Verfahren zu dessen Herstellung. Die Deckschicht ist eine abziehbare Schutzfolie, die die Klarlackschicht während des Formens schützt und dem Lackfilm während des Formens Festigkeit verleiht, um Risse, Durchschmelzen und Aufreißen zu vermeiden. Dem Dokument WO 2018/188939 A1 zufolge verbindet die Haftschicht die Verstärkungsschicht mit einem Substrat und kann aus einem mit dem Substrat kompatiblen thermoplastischen Film oder Harz oder alternativ aus einem wärmeaktivierten Klebstoff bestehen, wobei es erforderlich sein kann, die Verstärkungsschicht mit einem haftvermittelnden Primer zu beschichten, um die Haftung der Klebeschicht darauf zu erleichtern. Zum Aufbringen des Lackfilms auf einen spritzgegossenen Gegenstand, der bei einer Spritzgießformtemperatur hergestellt ist, wird der Lackfilm in eine Spritzgießform eingebracht, die auf der Spritzgießformtemperatur gehalten wird, wobei die Deckschicht einem Hohlraum der Form zugewandt ist, und eine fließfähiges Harzes wird in einen Raum auf der anderen Seite des Films aus dem Hohlraum eingespritzt, wobei der Film in Kontakt mit der Oberfläche des Hohlraums gedrückt und an dem eingespritzten Harz angeklebt wird, was zu einem mit einem Lackfilms bedeckten spritzgegossenen Gegenstand führt, wobei der Lackfilms während der Bildung des mit einem Lackfilms bedeckten spritzgegossenen Gegenstands ein Abziehverhältnis von mindestens 1,2 erfährt.

Der Erfindung liegt die Aufgabe zugrunde, ein eingangs genanntes Verfahren zu verbessern. Außerdem liegt der Erfindung die Aufgabe zugrunde, eine eingangs genannte Folie baulich und/oder funktional zu verbessern. Außerdem liegt der Erfindung die Aufgabe zugrunde, ein eingangs genanntes Trägerteil baulich und/oder funktional zu verbessern.

Die Aufgabe wird gelöst mit einem Verfahren mit den Merkmalen des Anspruchs 1. Außerdem wird die Aufgabe gelöst mit einer Folie mit den Merkmalen des Anspruchs 5. Außerdem wird die Aufgabe gelöst mit einem Trägerteil mit den Merkmalen des Anspruchs 9. Vorteilhafte Ausführungen und Weiterbildungen sind Gegenstand der Unteransprüche.

Das Verfahren kann Anwendung in einer Serienfertigung finden. Das Spritzgussverfahren kann ein Spritzguss-Integralschaumverfahren sein. Das Spritzguss-Intergalverfahren kann ein Schäumen und ein Spritzprägen umfassen. Das Schäumen kann ein chemisches und/oder physikalisches Schäumen sein. Das Spritzgussverfahren kann mithilfe eines öffen- und schließbaren Formwerkzeugs durchgeführt werden.

Die Klebstoffschicht kann freigegeben und/oder aktiviert werden. Die Schutzschicht kann von der Klebstoffschicht abgezogen werden. Die Folie mit Basisschicht, Rückseite der Folie, d.h. auf der Oberfläche, auf der das Beschichtungsmittel nicht aufgebracht wird, optional eine thermisch verformbare Klebstoffschicht aufgebracht sein. Zusätzlich kann auf der Oberfläche der Klebeschicht noch eine Schutzfolie aufgebracht werden, die ebenfalls thermisch verformbar ist. Die verformte beschichtete Folie kann vor oder nach der Endhärtung durch Hinterspritzen oder auch Hinterschäumen modifiziert werden, ggf. mit einer Klebschicht als Haftvermittler.

Aus dem Dokument WO 94/03337 A2 ist ein Verfahren bekannt zum Aufbringen eines Farbfilms auf einen spritzgegossenen Gegenstand, der bei einer Spritzgießtemperatur hergestellt wurde, der Farbfilm umfassend eine Oberflächenschicht mit einer Außenfläche und einer Klebefläche und eine Deckschicht, die lösbar an der Außenfläche angebracht ist und in direktem, engem Kontakt mit dieser steht, wobei die Deckschicht eine Bruchspannung von etwa 2.000 psi (141 kg/cm²) bis 10.000 psi (704 kg/cm²) bei der Spritzgießtemperatur aufweist, das Verfahren umfassend das Anordnen des Farbfilms in einer Spritzgießform, die auf der Spritzgießtemperatur gehalten wird, wobei die Auskleidungsschicht einem Hohlraum der Form zugewandt ist, und das Einspritzen eines fließfähigen Harzes in einen Raum auf der anderen Seite des Films von dem Hohlraum, wobei der Film in Kontakt mit der Oberfläche des Hohlraums gedrängt wird und an dem eingespritzten Harz haftet, um zu einem mit einem Farbfilm bedeckten spritzgegossenen Gegenstand zu führen, wobei der Farbfilm während der Bildung des mit einem Farbfilm bedeckten spritzgegossenen Gegenstands ein Ziehverhältnis von mindestens 1,2 während der Bildung des mit einem Farbfilm überzogenen spritzgegossenen Gegenstandes erfährt.

Aus dem Dokument DE 103 28 046 A1 ist ein Verfahren bekannt zum Herstellen eines Kunststoffverbundbauteils, insbesondere Karosserieanbauteils, mit folgenden Schritten: wenigstens ein dünnes Applikationsnegativ wird an einer Innenwand eines Werkzeugs positioniert; eine Folie wird im Werkzeug plastisch verformt und dabei gegen die Innenwand und das Applikationsnegativ gepresst, sodass das Applikationsnegativ eine komplementäre, bleibende Einbuchtung in der Folie hinterlässt, wobei die plastisch verformte Folie auf einer Seite hinterschäumt oder hinterspritzt wird.

Aus dem Dokument DE 24 43 905 A1 ist ein Verfahren bekannt zum Aufbringen eines Verkleidungsteiles, welches aus einem mehrschichtigen Verbundmaterial mit einer thermoplastischen Trägerfolie, einer thermoplastischen Schaumstoffschicht und einer thermoplastischen Verkleidungsfolie über der Schaumstoffschicht durch Ausschweißen und/oder Tiefziehen hergestellt ist auf einen Träger durch Verkleben, wobei das Verkleidungsmaterial auf der von der Schaumstoffschicht abgelegenen Seite der Trägerfolie mit einem Haftkleber versehen und die Haftkleberschicht mit einer thermoplastischen Trennfolie abgedeckt wird, wobei beim Ausschweißen bzw. Tiefziehen des Verkleidungsteiles die Trennfolie mit durchgeschweißt bzw. verformt wird und wobei das so gebildete Verkleidungsteil nach Abziehen der Trennfolie an den Träger durch Aufdrücken aufgebracht wird.

Aus dem Dokument DE 19 42 494 A1 ist ein Verfahren bekannt zum Herstellen von Spritzgussteilen aus thermoplastischem Kunststoff, vorzugsweise schäumbarem Kunststoff, in mehrteiligen Spritzgusswerkzeugen und mit einer Ummantelung aus thermoplastischem Kunststoff, wobei eine Folie einseitig mit einem Haftvermittler besprüht, anschließend zwecks Trocknung und Aktivierung des Haftvermittlers sowie Überführung der Folie in den thermoplastischen Zustand beheizt, danach im Vakuum tiefgezogen, anschließend gelocht und danach mit thermoplastischem Kunststoff hinterspritzt und abschließend zwecks Heraustrennung des Formteiles abgeschnitten wird.

Der Erfindung liegt die Aufgabe zugrunde, ein eingangs genanntes Verfahren zu verbessern. Außerdem liegt der Erfindung die Aufgabe zugrunde, eine eingangs genannte Folie baulich und/oder funktional zu verbessern. Außerdem liegt der Erfindung die Aufgabe zugrunde, ein eingangs genanntes Trägerteil baulich und/oder funktional zu verbessern.

Die Aufgabe wird gelöst mit einem Verfahren mit den Merkmalen des Anspruchs 1. Außerdem wird die Aufgabe gelöst mit einer Folie mit den Merkmalen des Anspruchs 4. Außerdem wird die Aufgabe gelöst mit einem Trägerteil mit den Merkmalen des Anspruchs 8. Vorteilhafte Ausführungen und Weiterbildungen sind Gegenstand der Unteransprüche.

Das Verfahren kann Anwendung in einer Serienfertigung finden. Das Spritzgussverfahren kann ein Spritzguss-Integralschaumverfahren sein. Das Spritzguss-Intergalverfahren kann ein Schäumen und ein Spritzprägen umfassen. Das Schäumen kann ein chemisches und/oder physikalisches Schäumen sein. Das Spritzgussverfahren wird mithilfe eines öffen- und schließbaren Formwerkzeugs durchgeführt.

Die Klebstoffschicht wird freigegeben und/oder aktiviert. Die Schutzschicht kann von der Klebstoffschicht abgezogen werden. Die Folie mit Basisschicht, Klebstoffschicht und Schutzschicht kann umgeformt, insbesondere thermogeformt, werden. Die Basisschicht mit der Klebstoffschicht kann in dem Formwerkzeug thermogeformt werden. Die Basisschicht mit der Klebstoffschicht kann in dem geöffneten Formwerkzeug thermogeformt werden. Die Basisschicht mit der Klebstoffschicht kann mithilfe einer Heizeinrichtung thermogeformt werden. Die Basisschicht mit der Klebstoffschicht kann unterdruckunterstützt thermogeformt werden.

Ein Kunststoff kann eingespritzt werden. Ein Kunststoff kann zusammen mit einem Treibmittel eingespritzt werden. Der Kunststoff und gegebenenfalls das Treibmittel kann/können in das geschlossene Formwerkzeug eingespritzt werden. Die Basisschicht kann mit ihrer Sichtseite an dem Formwerkzeug anliegen. Klebstoffschichtseitig kann ein Formraum gebildet sein. Der Kunststoff und gegebenenfalls das Treibmittel kann/können in den Formraum eingespritzt werden. Nach dem Einspritzen kann das Formwerkzeug um einen Schäumhub geöffnet werden, um ein Aufschäumen des Kunststoffs zu ermöglichen. Abschließend wird das Formwerkzeug geöffnet, um das Trägerteil zu entnehmen.

Die Folie kann mehrschichtig sein. Die Folie kann dreischichtig sein. Die Folie kann eine Außenschicht, eine Innenschicht und wenigstens eine zwischen der Außenschicht und der Innenschicht angeordnete Zwischenschicht aufweisen. Die Folie kann biegeschlaff sein. Die Folie kann eigensteif sein. Die Basisschicht kann die Außenschicht bilden. Die Basisschicht kann eine Sichtseite und eine Rückseite aufweisen. Die Klebstoffschicht kann eine Zwischenschicht bilden. Die Klebstoffschicht kann an der Rückseite der Basisschicht angeordnet sein. Die Basisschicht und die Klebstoffschicht können miteinander fest verbunden sein. Die Basisschicht und die Klebstoffschicht können miteinander stoffschlüssig verbunden sein. Die Schutzschicht kann die Innenschicht bilden. Die Schutzschicht kann eine Funktionsseite und eine Außenseite aufweisen. Die Schutzschicht kann mit ihrer Funktionsseite an der Klebstoffschicht angeordnet sein. Die Klebstoffschicht und die Schutzschicht können miteinander lösbar verbunden sein. Die Funktionsseite der Schutzschicht kann zur lösbaren Verbindung der Schutzschicht mit der Klebstoffschicht dienen. Die Schutzschicht kann die Klebstoffschicht dicht abdecken.

Die Folie kann eine Dicke von ca. 100µm bis ca. 400µm, insbesondere von ca. 200µm bis ca. 300µm, aufweisen. Die Klebstoffschicht kann durch Entfernen der Schutzschicht freigebbar und/oder aktivierbar sein. Die Klebstoffschicht kann einen Schmelzklebstoff aufweisen.

Das Trägerteil kann die Folie und eine Schaumschicht oder eine Kompaktschicht aufweisen. Das Trägerteil kann als Instrumententafel dienen. Das Trägerteil kann als Verkleidungsteil dienen. Das Kraftfahrzeug kann ein PKW sein.

Zusammenfassend und mit anderen Worten dargestellt ergibt sich somit durch die Erfindung unter anderem eine Dünnfilmfolie mit integriertem Kaschierklebstoff. Bei einer Trägerherstellung kann eine Dünnfilmfolie mit integrierter Klebstoffschicht, beispielsweise Hotmelt, in Dünnfilmtechnik verarbeitet und kompakt oder aufgeschäumt hinterspritzt werden. Eine Deckschicht bzw. Schutzlayer kann vor dem Kaschieren vom Träger abgezogen werden. Zwischen Deckschicht bzw. Schutzlayer und der Klebstoffschicht kann keine oder eine nur geringe Haftung, evtl. nur eine mechanische Verkrallung, bestehen. Mit dem Abziehen der Deckschicht bzw. Schutzlayer kann der Kleber aktiviert werden bzw. kann die Klebstoffschicht zum Kaschieren (Aufbringen der Dekoroberfläche) freigegeben werden.

Mit der Erfindung werden Verschmutzungen während der Herstellung reduziert oder vermieden. Eine gesonderte Oberflächenaktivierung, wie Beflammen, kann entfallen. Ein Aufwand, wie Prozessaufwand, Zeitaufwand, Kostenaufwand, Instandhaltungsaufwand, Reinigungsaufwand und/oder Flächenbedarf, wird reduziert.

Nachfolgend wird ein Ausführungsbeispiel der Erfindung unter Bezugnahme auf Figuren näher beschrieben. Aus dieser Beschreibung ergeben sich weitere Merkmale und Vorteile.

Es zeigen schematisch und beispielhaft:
- Fig. 1: ein Aufheizen einer Folie mit Basisschicht, Klebstoffschicht und Schutzschicht in einem geöffneten Formwerkzeug,
- Fig. 2: ein unterdruckunterstütztes Thermoformen einer aufgeheizten Folie mit Basisschicht, Klebstoffschicht und Schutzschicht in einem geöffneten Formwerkzeug,
- Fig. 3: ein Einspritzen eines Kunststoffs und eines Treibmittels in einen Formraum eines geschlossenen Formwerkzeugs,
- Fig. 4: ein Aufschäumen eines Kunststoffs in einem Formraum eines um einen Schäumhub geöffneten Formwerkzeugs,
- Fig. 5: ein geöffnetes Formwerkzeug mit einem geschäumten Trägerteil mit einer Folie mit Basisschicht und Klebstoffschicht an dem Formwerkzeug und
- Fig. 6: ein entformtes geschäumtes Trägerteil mit einer Folie mit Basisschicht und Klebstoffschicht in einem geöffneten Formwerkzeug.

Zum Herstellen eines geschäumten dekorierbaren Trägerteils 100 für ein Kraftfahrzeug wird eine Folie 102 mit Basisschicht, Klebstoffschicht und Schutzschicht in einem Spritzguss-Intergalschaum-Verfahren hinterspritzt.

Die Schutzschicht bildet eine Außenschicht bzw. Sichtseite der Folie 102. Die Basisschicht bildet eine Innenschicht bzw. Rückseite der Folie 102. Die Klebstoffschicht ist zwischen der Basisschicht und der Schutzschicht angeordnet und bildet eine Zwischenschicht der Folie 102. Die Basisschicht und die Klebstoffschicht sind miteinander stoffschlüssig fest verbunden. Die Klebstoffschicht und die Schutzschicht sind miteinander lösbar verbunden. Die Folie weist eine Dicke von 200µm bis ca. 300µm auf.

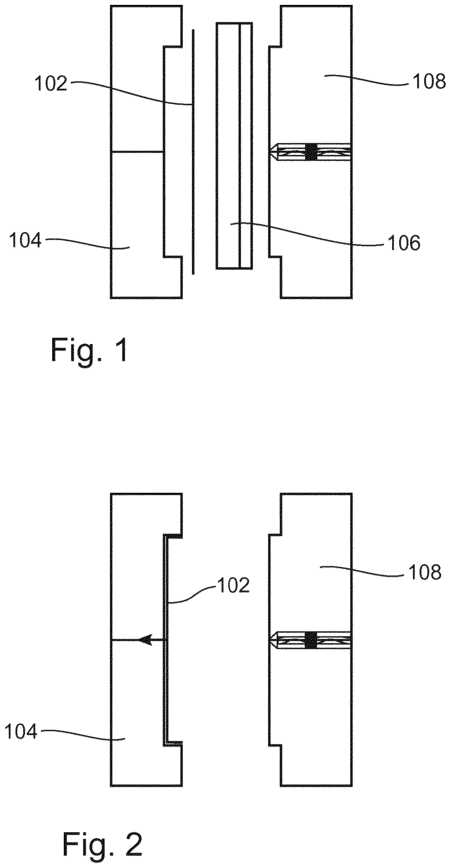

Zum Herstellen des Trägerteils 100 wird zunächst die Folie 102 mit der Basisschicht, der Klebstoffschicht und der Schutzschicht, wie in Fig. 1 dargestellt, in einem geöffneten Formwerkzeug angeordnet. Dabei ist die Schutzschicht einem Formwerkzeugteil 104 des Formwerkzeugs zugewandt. Basisschichtseitig wird die Folie 102 falls erforderlich mithilfe einer Heizeinrichtung 106 aufgeheizt, um ein plastisches Umformen der Folie 102 zu ermöglichen. Nachfolgend wird die Folie 102, wie in Fig. 2 dargestellt, unterdruckunterstützt an dem Formwerkzeugteil 104 des Formwerkzeugs thermogeformt.

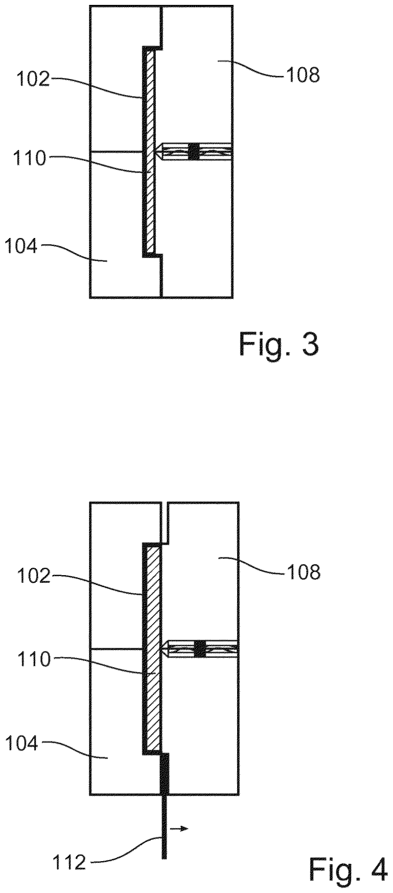

Nachfolgend wird das Formwerkzeug geschlossen. Dabei liegt die Folie 102 mit der Schutzschicht an dem Formwerkzeugteil 104 an. Zwischen der Basisschicht und einem Formwerkzeugteil 108 des Formwerkzeugs ist ein Formraum 110 gebildet. In den Formraum 110 wird, wie in Fig. 3 dargestellt, ein plastifizierter Kunststoff zusammen mit einem Treibmittel eingespritzt. Dabei verbinden sich der eingespritzte Kunststoff und die Basisschicht der Folie 102 stoffschlüssig fest miteinander. Mit Erkalten des Kunststoffs ergibt sich eine zumindest annähernd konstant dicke Außenhaut über das Trägerteil 100.

Nach dem Einspritzen und Verfestigen der Außenhaut wird das Formwerkzeug, wie in Fig. 4 dargestellt, um einen Schäumhub 112 geöffnet, um ein Aufschäumen des noch nicht verfestigten Kunststoffs im Inneren des Trägerteils 100 zu ermöglichen.

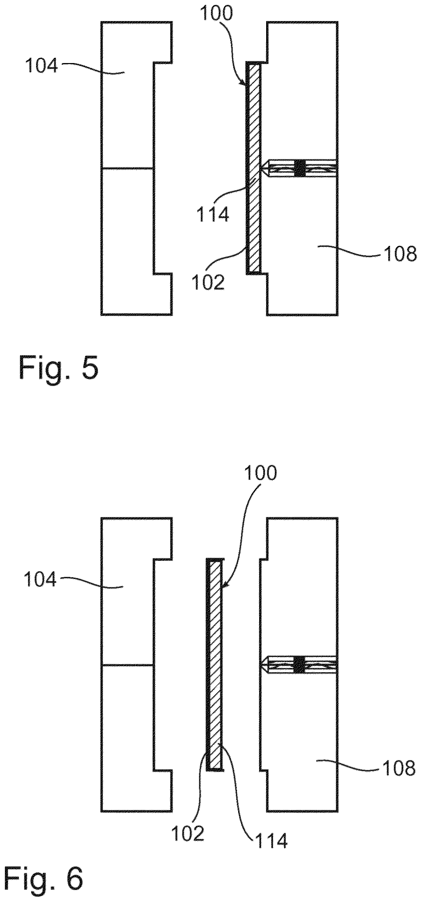

Abschließend wird das Formwerkzeug, wie in Fig. 5 dargestellt, vollständig geöffnet, um das geschäumte Trägerteil 100 mit der Folie 102, wie in Fig. 6 dargestellt, zu entnehmen. Das geschäumte Trägerteil 100 weist einen Schaumkörper 114 mit Außenhaut und damit fest verbunden die Folie 102 mit Basisschicht, Klebstoffschicht und Schutzschicht auf.

Um die Klebstoffschicht freizugeben und/oder zu aktivieren, wird die Schutzschicht entfernt. Nachfolgend wird ein Dekor, wie Leder, Kunstleder oder Textil, aufgebracht. Die freigegebene und/oder aktivierte Klebstoffschicht bewirkt dann eine stoffschlüssige Verbindung zwischen dem geschäumten Trägerteil 100 und dem Dekor.

### Bezugszeichen

- 100: Trägerteil
- 102: Folie
- 104: Formwerkzeugteil
- 106: Heizfeld
- 108: Formwerkzeugteil
- 110: Formraum
- 112: Schäumhub
- 114: Schaumkörper

## Patentansprüche

1. Verfahren zum Herstellen eines geschäumten dekorierten Trägerteils (100) für ein Kraftfahrzeug, **dadurch gekennzeichnet, dass** ein geschäumtes dekorierbares Trägerteil (100) hergestellt wird, wobei eine Folie (102) mit Basisschicht, Klebstoffschicht und Schutzschicht, bei der die Basisschicht eine Rückseite der Folie (102) bildet, die Klebstoffschicht zwischen der Basisschicht und der Schutzschicht angeordnet, mit der Basisschicht stoffschlüssig fest verbunden und mit der Schutzschicht lösbar verbunden ist, und die Schutzschicht eine Außenschicht der Folie (102) bildet, in einem Spritzgussverfahren mithilfe eines öffen- und schließbaren Formwerkzeugs hinterspritzt wird, wobei sich ein eingespritzter Kunststoff und die Basisschicht der Folie (102) stoffschlüssig fest miteinander verbinden, das Formwerkzeug geöffnet wird, um das Trägerteil (100) zu entnehmen, wobei die Schutzschicht entfernt wird, um die Klebstoffschicht freizugeben und/oder zu aktivieren, und ein Dekor aufgebracht wird, wobei die freigegebene und/oder aktivierte Klebstoffschicht dann eine stoffschlüssige Verbindung zwischen dem geschäumten Trägerteil (100) und dem Dekor bewirkt.

2. Verfahren nach Anspruch 1, **dadurch gekennzeichnet, dass** der Kunststoff zusammen mit einem Treibmittel in einen zwischen der Basisschicht und einem Formwerkzeugteil (108) eines Formwerkzeugs gebildeten Formraum (110) eingespritzt wird.

3. Verfahren wenigstens einem der vorhergehenden Ansprüche, **dadurch gekennzeichnet, dass** nach dem Einspritzen und Verfestigen der Außenhaut das Formwerkzeug um einen Schäumhub (112) geöffnet wird, um ein Aufschäumen des noch nicht verfestigten Kunststoffs im Inneren des Trägerteils (100) zu ermöglichen.

4. Verwendung einer Folie (102) in einem Verfahren nach wenigstens einem der vorhergehenden Ansprüche, wobei die Folie (102) eine Basisschicht, eine Klebstoffschicht und eine Schutzschicht aufweist, wobei die Basisschicht eine Rückseite der Folie (102) bildet, die Klebstoffschicht zwischen der Basisschicht und der Schutzschicht angeordnet, mit der Basisschicht stoffschlüssig fest verbunden und mit der Schutzschicht lösbar verbunden ist, und die Schutzschicht eine Außenschicht der Folie (102) bildet, und die Folie (102) in einem Spritzgussverfahren hinterspritzbar ist.

5. Verwendung einer Folie (102) nach Anspruch 4, **dadurch gekennzeichnet, dass** die Folie (102) eine Dicke von ca. 100µm bis ca. 400µm, insbesondere von ca. 200µm bis ca. 300µm, aufweist.

6. Verwendung einer Folie (102) nach wenigstens einem der Ansprüche 4 bis 5, **dadurch gekennzeichnet, dass** die Klebstoffschicht durch Entfernen der Schutzschicht freigebbar und/oder aktivierbar ist, um nachfolgend ein Dekor aufzubringen.

7. Verwendung einer Folie (102) nach wenigstens einem der Ansprüche 4 bis 6, **dadurch gekennzeichnet, dass** die Klebstoffschicht einen Schmelzklebstoff aufweist.

## Claims

1. Method for producing a foamed decorated carrier part (100) for a motor vehicle, **characterized in that** a foamed decoration-capable carrier part (100) is produced, wherein a foil (102) with a base layer, an adhesive layer and a protective layer, in which the base layer forms a rear side of the foil (102), the adhesive layer is disposed between the base layer and the protective layer, fixedly connected to the base layer in a materially integral manner and releasably connected to the protective layer, and the protective layer forms an external layer of the foil (102), is back-injection moulded by an injection-moulding method with the aid of a mould which is able to be opened and closed, wherein an injected plastics material and the base layer of the foil (102) fixedly connect to one another in a materially integral manner, the mould is opened in order to retrieve the carrier part (100), wherein the protective layer is removed in order to expose and/or activate the adhesive layer, and a decoration is applied, wherein the exposed and/or activated adhesive layer then causes a materially integral connection between the foamed carrier part (100) and the decoration.

2. Method according to Claim 1, **characterized in that** the plastics material, conjointly with a propellant, is injected into a moulding space (110) formed between the base layer and a mould part (108) of a mould.

3. Method according to at least one of the preceding claims, **characterized in that**, after the injection and the solidification of the outer skin, the mould is opened by a foaming stroke (112) so as to enable the not yet solidified plastics material to expand in the interior of the carrier part (100).

4. Use of a foil (102) in a method according to at least one of the preceding claims, wherein the foil (102) has a base layer, an adhesive layer and a protective layer, wherein the base layer forms a rear side of the foil (102), the adhesive layer is disposed between the base layer and the protective layer, fixedly connected to the base layer in a materially integral manner and releasably connected to the protective layer, and the protective layer forms an external layer of the foil (102), and the foil (102) is able to be back-injection moulded by an injection-moulding method.

5. Use of a foil (102) according to Claim 4, **characterized in that** the foil (102) has a thickness of approx. 100 µm to approx. 400 pm, in particular of approx. 200 µm to approx. 300 µm.

6. Use of a foil (102) according to at least one of Claims 4 to 5, **characterized in that** the adhesive layer is able to be exposed and/or activated by removing the protective layer, so as to subsequently apply a decoration.

7. Use of a foil (102) according to at least one of Claims 4 to 6, **characterized in that** the adhesive layer comprises a hot-melt adhesive.

## Revendications

1. Procédé de fabrication d'une pièce de support décorée moussée (100) pour un véhicule automobile, **caractérisé en ce qu'**une pièce de support décorée moussée (100) est fabriquée, une feuille (102) avec une couche de base, une couche adhésive et une couche de protection, dans laquelle la couche de base forme un côté arrière de la feuille (102), la couche adhésive est agencée entre la couche de base et la couche de protection, étant reliée solidement à la couche de base par liaison par matière et étant reliée de manière amovible à la couche de protection, et la couche de protection formant une couche extérieure de la feuille (102), est surmoulée dans un procédé de moulage par injection à l'aide d'un outil de moulage pouvant être ouvert et fermé, une matière plastique injectée et la couche de base de la feuille (102) se liant solidement l'une à l'autre par liaison de matière, l'outil de moulage étant ouvert pour retirer la pièce de support (100), la couche de protection étant enlevée pour libérer et/ou activer la couche adhésive, et un décor étant appliqué, la couche adhésive libérée et/ou activée provoquant alors une liaison par liaison de matière entre la pièce de support (100) moussée et le décor.

2. Procédé selon la revendication 1, **caractérisé en ce que** la matière plastique est injectée conjointement avec un agent gonflant dans un espace de moulage (110) formé entre la couche de base et une partie d'outil de moulage (108) d'un outil de moulage.

3. Procédé selon au moins l'une quelconque des revendications précédentes, **caractérisé en ce qu'**après l'injection et la solidification de la peau extérieure, l'outil de moulage est ouvert d'une course de moussage (112) pour permettre un moussage de la matière plastique non encore solidifiée à l'intérieur de la pièce de support (100).

4. Utilisation d'une feuille (102) dans un procédé selon au moins l'une quelconque des revendications précédentes, la feuille (102) présentant une couche de base, une couche adhésive et une couche de protection, la couche de base formant un côté arrière de la feuille (102), la couche adhésive étant agencée entre la couche de base et la couche de protection, étant reliée solidement à la couche de base par liaison de matière et étant reliée de manière amovible à la couche de protection, et la couche de protection formant une couche extérieure de la feuille (102), et la feuille (102) pouvant être surmoulée dans un procédé de moulage par injection.

5. Utilisation d'une feuille (102) selon la revendication 4, **caractérisée en ce que** la feuille (102) présente une épaisseur d'environ 100 µm à environ 400 µm, en particulier d'environ 200 µm à environ 300 µm.

6. Utilisation d'une feuille (102) selon au moins l'une quelconque des revendications 4 à 5, **caractérisée en ce que** la couche adhésive peut être libérée et/ou activée en enlevant la couche de protection pour appliquer ensuite un décor.

7. Utilisation d'une feuille (102) selon au moins l'une quelconque des revendications 4 à 6, **caractérisée en ce que** la couche adhésive comprend un adhésif thermofusible.
